# FASCICULE DE BREVET EUROPEEN

(11) **EP 1 989 076 B1**
(45) Date de publication et mention de la délivrance du brevet: **02.12.2009**
(21) Numéro de dépôt: 07731595.0
(22) Date de dépôt: 09.02.2007
(51) Int. Cl.: B60K 13/04

(54) **STRUCTURE ARRIERE D'UN VEHICULE AUTOMOBILE**
RÜCKSTRUKTUR FÜR EIN KRAFTFAHRZEUG
REAR STRUCTURE OF A MOTOR VEHICLE

(30) Priorité: 27.02.2006 FR 0650666
(43) Date de publication de la demande: 12.11.2008
(73) Titulaire: RENAULT S.A.S., 92100 Boulogne Billancourt (FR)
(72) Inventeur: GROSDIDIER, Marc, F-91650 Saint-Yon (FR); LE DUC, François, F-92140 Clamart (FR); SUEUR, Eric, F-77400 Lagny Sur Marne (FR)
(74) Mandataire: Guyon, Rodolphe C.
(86) Numéro de dépôt international: PCT/FR2007/050770
(87) Numéro de publication internationale: WO 2007/096549

(56) Documents cités:
- EP-A2- 1 013 540
- DE-A1- 4 319 281
- DE-U1- 29 703 392
- JP-A- 4 339 079
- US-A- 5 321 214
- US-A1- 2002 185 893

## Description

La présente invention concerne une structure arrière de véhicule automobile, comportant au moins un plancher et un dispositif d'échappement s'étendant transversalement sous ce plancher. La publication DE-A-43 19 281 divulgue une structure arrière d'après le préambule de la revendication 1.

Un diffuseur est un élément aérodynamique notamment connu dans les véhicules sportifs. Placé à l'arrière du véhicule, il vise à créer un effet d'aspiration le plus important possible en faisant le lien entre la pression sous le véhicule et la pression en aval de celui-ci. Cet effet d'aspiration est notamment obtenu en conduisant les flux d'air par des nervures formant des tunnels, de manière à diriger l'air vers l'arrière du véhicule selon une direction sensiblement montante.

La mise en place de diffuseur sur des véhicules automobiles est notamment connue pour des véhicules munis de moteur à l'arrière, le diffuseur étant suspendu sous la caisse et sous le groupe propulseur par des tirants verticaux.

Un des objectifs de l'invention est de proposer une structure arrière comportant un diffuseur pour un véhicule automobile muni d'un moteur à l'avant, un tel véhicule comportant alors dans sa partie arrière un coffre et un plancher de coffre associé sous lequel doit s'étendre au moins en partie le diffuseur.

En outre, la présente invention vise à s'appliquer pour des véhicules automobiles dans lequel les sorties d'échappement peuvent être réalisées à l'arrière du véhicule. Dans des mises en place classiques de diffuseur évoquées plus haut, la suspension du diffuseur est facilitée par la disposition des sorties d'échappement sur les côtés du véhicule. La présente invention tient à prendre en compte la possibilité de la présence d'un silencieux d'échappement occupant le volume situé entre le plancher de coffre et le diffuseur, rendant difficile la suspension du diffuseur sous caisse, et présentant des contraintes mécaniques fortes du fait de la diffusion de la chaleur par l'échappement.

Pour répondre à ces objectifs, l'invention propose une structure telle que décrite précédemment, caractérisé en ce que cette structure comprend un diffuseur qui s'étend sensiblement sous le dispositif d'échappement, un écran thermique disposé entre ce diffuseur et le dispositif d'échappement, l'écran thermique reposant au moins en partie sur le diffuseur de sorte qu'au moins un contact direct est créé entre le diffuseur et l'écran thermique.

Selon différentes caractéristiques de la présente invention :
- le diffuseur est formé d'une première partie sensiblement plane, qui s'étend sous le véhicule et notamment sous le dispositif d'échappement, cette première partie comportant des nervures de rigidification orientées vers l'écran thermique et le dispositif d'échappement, et en ce que l'écran thermique repose sur ces nervures ;
- les nervures formées sur le diffuseur sont réalisées dans un matériau non conducteur de chaleur .;
- les nervures formées sur le diffuseur sont réalisées en polypropylène ;
- l'ensemble du diffuseur est réalisé en polypropylène ;
- l'écran thermique est contraint sur les nervures de rigidification.

L'invention concerne également un véhicule automobile qui comprend une structure arrière tel qu'évoquée ci dessus.

D'autres caractéristiques et avantages de l'invention apparaîtront à la lecture de la description détaillée qui suit, et pour la compréhension de laquelle on se reportera aux dessins annexés dans lesquels :
- la figure 1 est une représentation schématique d'une structure arrière d'un véhicule automobile comprenant un diffuseur ;
- la figure 2 est une vue en éclaté d'une structure arrière selon l'invention ;
- la figure 3 est une vue en coupe d'une structure arrière selon l'invention.

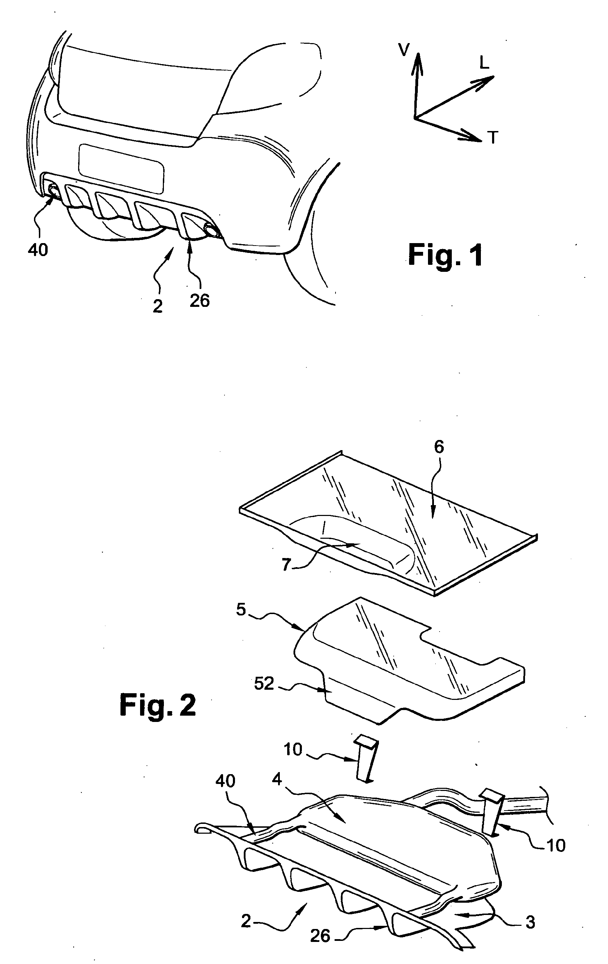

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

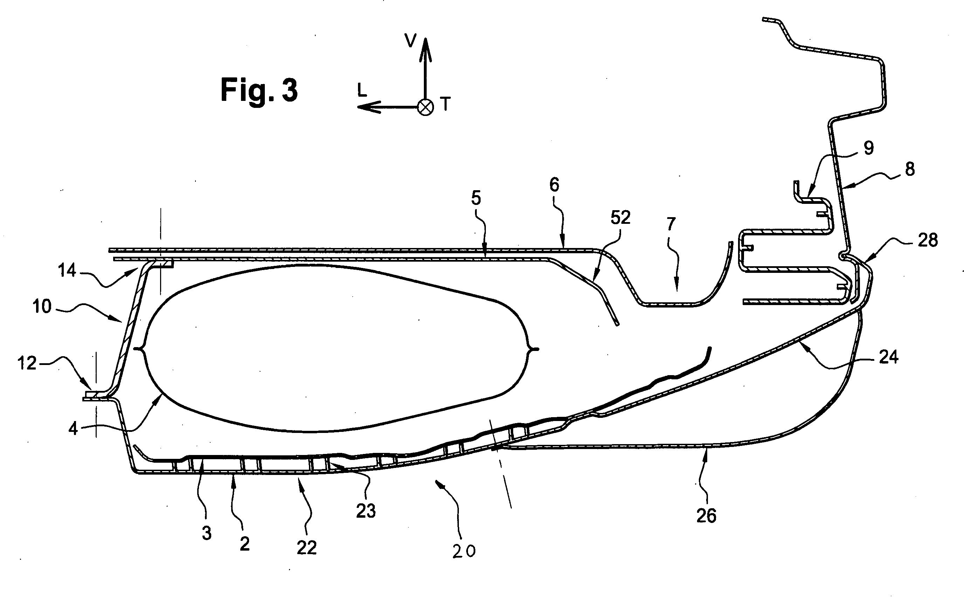

Tel que représentée sur les figures, un diffuseur 2 est disposé à l'arrière d'un véhicule automobile. Le fond du diffuseur présente une première partie 22 sensiblement plane qui s'étend sous le véhicule et notamment sous le dispositif d'échappement 4, et une seconde partie 24 inclinée et montante vers l'arrière du véhicule, de sorte que l'air situé sous le véhicule est dirigé en arrière selon un flux montant apte à favoriser le comportement aérodynamique du véhicule. Depuis l'extérieur du véhicule, le diffuseur 2 présente des nervures 26 sensiblement verticales et longitudinales, qui s'étendent le long de la seconde partie inclinée 24 du diffuseur 2 et qui sont aptes à diriger le flux d'air. Tel que représenté à la figure 3, l'extrémité arrière du diffuseur 2 est clippée dans le bouclier 8 du véhicule par l'intermédiaire de pattes de fixation 28.

Selon la présente invention, le diffuseur 2 est disposé dans une structure arrière 1 de véhicule automobile ne comportant pas de groupe motopropulseur, ici disposé à l'avant du véhicule, mais comportant un plancher de coffre 6 délimitant verticalement le compartiment arrière. Tel que représenté sur l'éclaté de la figure 2, un dispositif d'échappement 4 est disposé dans le volume crée entre le plancher plat 6 et le diffuseur 2, au moins une sortie d'échappement 40 étant orientée vers l'arrière du véhicule et débouchant par la seconde partie inclinée du diffuseur 24. Une double protection est réalisée pour protéger la structure des radiations du dispositif d'échappement 4. Un écran thermique 3, notamment visible à la figure 3, est positionné en appui sur le diffuseur 2, entre ce diffuseur 2 et le dispositif d'échappement 4, tandis qu'un deuxième moyen de protection thermique 5 est disposé entre le dispositif d'échappement 4 et le plancher de coffre arrière 6.

Tel qu'évoqué plus haut, le diffuseur 2 est fixé, au niveau de sa deuxième partie inclinée 24, sur le bouclier 8 par clippage. Des pattes de fixation 28 formées à l'extrémité arrière du diffuseur 2 sont ainsi emboîtées élastiquement dans une zone de réception sur ce bouclier 8. L'extrémité longitudinale opposée du diffuseur 2 est suspendue sous le plancher de coffre arrière 6 en au moins deux points de fixation par l'intermédiaire de supports verticaux 10. Ces supports 10 sont ainsi solidarisés à une première extrémité 12 à la première partie plane 22 du diffuseur 2, et solidarisés à leur extrémité opposée 14 au plancher de coffre 6 et au deuxième moyen de protection thermique associé 5 qui permet le passage des moyens de fixation des supports verticaux 10.

Le plancher de coffre 6 présente une forme sensiblement plane adaptée à un compartiment de coffre arrière. Selon un mode de réalisation de l'invention, ce plancher 6 peut comporter, sur le côté orienté vers l'arrière du véhicule, une forme creuse 7 formant réceptacle, par exemple pour le rangement d'un cric sous l'habillage du plancher de coffre. Cette forme peut par exemple être réalisée par un embouti aux dimensions adéquates pour le logement du cric. La forme creuse formant réceptacle 7, qui s'étend de manière connue sous le plan principal du plancher arrière 6, est réalisée pour être positionné entre le dispositif d'échappement 4 et la poutre arrière 9 du véhicule supportant le bouclier 8, ce qui permet d'empêcher la diffusion de la chaleur de l'échappement vers cette poutre arrière 9, dont la composition ne pourrait supporter cette chaleur dégagée. Tel que représenté, le deuxième moyen de protection thermique 5 peut présenter sur son côté orienté vers l'arrière du véhicule, une forme inclinée 52 correspondante à l'inclinaison de l'embouti 7 sous plancher, de manière à participer à la déflection de la chaleur de l'échappement.

Un écran thermique 3 est disposé entre le dispositif d'échappement 4 et le diffuseur 2. Il s'agit d'éviter le réchauffement et les contraintes thermiques sur le diffuseur 2, et assurer ainsi les propriétés mécaniques du diffuseur 2 qui pourraient être altérées par la chaleur dégagée. Le dispositif d'échappement 4 prenant la totalité du volume disponible entre le plancher de coffre 6 et le diffuseur 2, cet écran thermique 3 est selon l'invention directement en contact avec le diffuseur 2. L'utilisation dans le cadre de l'invention de polypropylène pour la réalisation du diffuseur 2 permet d'obtenir une pièce injectée intéressante en tenues de coût et de dessin, mais sensible aux contraintes thermiques. L'invention propose alors un diffuseur 2 dont au moins la première partie 22 sensiblement plane est munie, sur la face située vers l'intérieur du véhicule et orientées vers l'écran thermique 3 et le dispositif d'échappement 4, de nervures de rigidification 23. L'écran thermique 3 est alors positionné sur ces nervures de rigidification 23, le fonctionnement thermique étant alors le suivant : l'écran thermique 3 absorbe la chaleur dégagée par l'échappement 4, et les nervures de rigidification 23 sur lesquelles est positionné cet écran thermique 3 absorbent cette chaleur. Or, ces nervures de rigidification 23 sont venues de matière avec le diffuseur 2 et sont donc formées de polypropylène, qui n'est pas un matériau conducteur de chaleur. Seules ces nervures 23 sont ainsi impactées par la chaleur dégagée par l'échappement 4, et les propriétés mécaniques du diffuseur 2 ne sont pas altérées. Il s'agit alors de dimensionner ces nervures de rigidification 23 pour qu'elles puissent absorber une partie de la chaleur dégagée sans se déformer et qu'elles puissent ainsi continuer à servir de support à l'écran thermique 3. Il sera compris que les nervures de rigidification 23 peuvent être orientées transversalement tel que représenté à la figure 2, ou longitudinalement sans que cela sorte du contexte de l'invention, l'écran thermique 3 reposant dans tous les cas sur ces nervures 23.

Afin d'éviter des vibrations qui pourraient être générées par l'écran thermique 3 reposant sur le diffuseur 2, la forme de cet écran 3 est déterminée pour être contraint au montage sur les nervures de rigidification 23 formées sur le diffuseur 2. Cette forme et les différents points de fixation de l'écran thermique 3 participent ainsi à la rigidité de l'ensemble.

L'invention n'est nullement limitée au mode de réalisation décrit et illustré qui n'a été donné qu'à titre d'exemple. Il sera ainsi compris que l'extrémité arrière de l'écran thermique pourra présenter une forme relevée, sensiblement symétrique à la forme tombante du deuxième moyen de protection thermique, par rapport au plan médian du diffuseur.

## Revendications

1. Structure arrière d'un véhicule automobile, comportant au moins un plancher (6) et un dispositif d'échappement (4) s'étendant transversalement sous le plancher (6), cette structure comprenant un diffuseur (2) qui s'étend sensiblement sous le dispositif d'échappement (4), **caractérisée en ce qu'**un écran thermique (3) est disposé entre ce diffuseur (2) et le dispositif d'échappement (4), l'écran thermique (3) reposant au moins en partie sur le diffuseur (2) de sorte qu'au moins un contact direct est créé entre le diffuseur (2) et l'écran thermique (3).

2. Structure arrière selon la revendication 1, **caractérisée en ce que** le diffuseur (2) est formé d'une première partie (22) sensiblement plane, qui s'étend sous le véhicule et notamment sous le dispositif d'échappement (4), cette première partie (22) comportant des nervures de rigidification (23) orientées vers l'écran thermique (3) et le dispositif d'échappement (4), et **en ce que** l'écran thermique (3) repose sur ces nervures (23) de rigidification.

3. Structure arrière selon la revendication 2, **caractérisée en ce que** les nervures de rigidification (23) formées sur le diffuseur (2) sont réalisées dans un matériau non conducteur de chaleur.

4. Structure arrière selon la revendication 2 ou 3, **caractérisée en ce que** les nervures (23) formées sur le diffuseur (2) sont réalisées en polypropylène.

5. Structure arrière selon la revendication précédente, **caractérisée en ce que** l'ensemble du diffuseur (2) est réalisé en polypropylène.

6. Structure arrière selon l'une des revendications 2 à 5, **caractérisée en ce que** l'écran thermique (3) est contraint sur les nervures de rigidification (23).

7. Véhicule automobile, **caractérisé en ce qu'**il comprend une structure arrière selon l'une de revendications précédentes.

## Claims

1. Rear structure of a motor vehicle, comprising at least one floor (6) and an exhaust device (4) running transversely under the floor (6), this structure comprising a diffuser (2) which runs substantially under the exhaust device (4), **characterized in that** a heat shield (3) is positioned between this diffuser (2) and the exhaust device (4), the heat shield (3) resting at least in part on the diffuser (2) so that at least one direct contact is created between the diffuser (2) and the heat shield (3).

2. Rear structure according to Claim 1, **characterized in that** the diffuser (2) is formed of a substantially planar first part (22) which runs under the vehicle and notably under the exhaust device (4), this first part (22) comprising stiffening ribs (23) directed towards the heat shield (3) and the exhaust device (4), and **in that** the heat shield (3) rests on these stiffening ribs (23).

3. Rear structure according to Claim 2, **characterized in that** the stiffening ribs (23) formed on the diffuser (2) are made of a material that is not a conductor of heat.

4. Rear structure according to Claim 2 or 3, **characterized in that** the ribs (23) formed on the diffuser (2) are made of polypropylene.

5. Rear structure according to the preceding claim, **characterized in that** the entire diffuser (2) is made of polypropylene.

6. Rear structure according to one of Claims 2 to 5, **characterized in that** the heat shield (3) is constrained on the stiffening ribs (23).

7. Motor vehicle, **characterized in that** it comprises a rear structure according to one of the preceding claims.

## Patentansprüche

1. Rückstruktur für ein Kraftfahrzeug, die mindestens einen Boden (6) und eine Auslassvorrichtung (4), die sich quer unter dem Boden (6) erstreckt, aufweist, wobei diese Struktur einen Diffusor (2) umfasst, der sich im Wesentlichen unter der Auslassvorrichtung (4) erstreckt, **dadurch gekennzeichnet, dass** eine Wärmeabschirmung (3) zwischen diesem Diffusor (2) und der Auslassvorrichtung (4) angeordnet ist, wobei die Wärmeabschirmung (3) zumindest teilweise so auf dem Diffusor (2) aufliegt, dass mindestens ein direkter Kontakt zwischen dem Diffusor (2) und der Wärmeabschirmung (3) erzeugt wird.

2. Rückstruktur nach Anspruch 1, **dadurch gekennzeichnet, dass** der Diffusor (2) aus einem im Wesentlichen ebenen ersten Teil (22) besteht, der sich unter dem Fahrzeug und insbesondere unter der Auslassvorrichtung (4) erstreckt, wobei dieser erste Teil (22) Verstärkungsrippen (23) aufweist, die zu der Wärmeabschirmung (3) und der Auslassvorrichtung (4) ausgerichtet sind, und dass die Wärmeabschirmung (3) auf diesen Verstärkungsrippen (23) aufliegt.

3. Rückstruktur nach Anspruch 2, **dadurch gekennzeichnet, dass** die an dem Diffusor (2) ausgebildeten Verstärkungsrippen (23) aus einem nicht wärmeleitenden Material hergestellt sind.

4. Rückstruktur nach Anspruch 2 oder 3, **dadurch gekennzeichnet, dass** die an dem Diffusor (2) ausgebildeten Rippen (23) aus Polypropylen hergestellt sind.

5. Rückstruktur nach dem vorhergehenden Anspruch, **dadurch gekennzeichnet, dass** die Diffusoranordnung (2) aus Polypropylen hergestellt ist.

6. Rückstruktur nach einem der Ansprüche 2 bis 5, **dadurch gekennzeichnet, dass** die Wärmeabschirmung (3) gegen die Verstärkungsrippen (23) gespannt wird.

7. Kraftfahrzeug, **dadurch gekennzeichnet, dass** es eine Rückstruktur nach einem der vorhergehenden Ansprüche aufweist.
